# EUROPÄISCHE PATENTSCHRIFT

(11) **EP 2 214 957 B1**
(45) Veröffentlichungstag und Bekanntmachung des Hinweises auf die Patenterteilung: **20.04.2011**
(21) Anmeldenummer: 08844468.2
(22) Anmeldetag: 31.10.2008
(51) Int. Cl.: B64C 1/10

(54) **STRUKTUR, INSBESONDERE RUMPFSTRUKTUR EINES LUFT- ODER RAUMFAHRZEUGS**
STRUCTURE, ESPECIALLY A FUSELAGE STRUCTURE OF AN AIRCRAFT OR A SPACECRAFT
STRUCTURE, EN PARTICULIER STRUCTURE DE FUSELAGE D'UN AÉRONEF OU D'UN VÉHICULE SPATIAL

(30) Priorität: 31.10.2007 DE 102007052140; 31.10.2007 US 984038 P
(43) Veröffentlichungstag der Anmeldung: 11.08.2010
(73) Patentinhaber: Airbus Operations GmbH, 21129 Hamburg (DE)
(72) Erfinder: STEPHAN, Andreas, 21717 Fredenbeck (DE)
(74) Vertreter: Peckmann, Ralf
(86) Internationale Anmeldenummer: PCT/EP2008/064843
(87) Internationale Veröffentlichungsnummer: WO 2009/056643

(56) Entgegenhaltungen:
- EP-A- 1 816 070
- DE-A1- 3 844 080
- US-A- 5 899 412

## Beschreibung

Die vorliegende Erfindung bezieht sich auf eine Struktur, insbesondere auf eine Rumpfstruktur eines Luft- oder Raumfahrzeugs.

Obwohl auf beliebige Strukturen anwendbar, werden die vorliegende Erfindung sowie die ihr zugrunde liegende Problematik in Bezug auf eine Rumpfstruktur eines Flugzeugs näher erläutert.

Während der Flugphase wird die Kabine eines Flugzeugs mit einem Innendruck beaufschlagt, der über dem atmosphärischen Auβendruck liegt. Dafür muss die Kabine druckdicht ausgebildet sein. Die Rumpfstruktur des Flugzeugs ist im Heckbereich daher mit einem Druckschott vorgesehen. Derartige Rumpfstrukturen mit Druckschotts sind beispielsweise aus der DE 3 844 080 A1 (Oberbegriff des Anspruchs 1), EP 0 847 916 B1, DE 3923871 C2 oder EP 0 217 117 B1 bekannt.

Es hat sich jedoch herausgestellt, dass die bekannten Rumpfstrukturen sowohl in montagetechnischer Hinsicht als auch hinsichtlich ihres Gewichts nicht den gestiegenen Anforderungen im Flugzeugbereich entsprechen.

Es ist daher Aufgabe der vorliegenden Erfindung eine verbesserte Struktur bereitzustellen, die insbesondere einfacher zu montieren ist und/oder zu einer Gewichtseinsparung führt.

Demgemäß wird eine Struktur, insbesondere eine Rumpfstruktur eines Luft- oder Raumfahrzeugs bereitgestellt. Die Struktur weist einen Hautabschnitt mit einer Öffnung auf, die mittels einer Druckkalotte druckdicht verschlossen ist. Ferner sieht die Struktur mehrere Zugstreben vor, welche jeweils die Druckkalotte mit dem Hautabschnitt verbinden und auf die Druckkalotte wirkende Lasten als Zuglasten aufnehmen.

Die der vorliegenden Erfindung zugrundeliegende Idee besteht darin, die sich aus der Druckdifferenz zwischen Kabinendruck und atmosphärischem Druck ergebenden Drucklasten, welche auf die Druckkalotte wirken, in Form von Zuglasten in den Hautabschnitt einzuleiten. Die Zugstreben lassen sich mit einem vergleichsweise kleinen Querschnitt und daher mit geringem Gewicht ausbilden, da sie lediglich auf Zug und nicht etwa in Biegung belastet werden. Ferner lassen sich derartige Zugstreben sehr einfach herstellen und mit der Druckkalotte bzw. dem Hautabschnitt montagetechnisch einfach verbinden.

Gemäß der erfindungsgemäßen Struktur ist ein Spant vorgesehen, welcher mit dem Hautabschnitt und der Druckkalotte druckdicht verbunden ist. Der Spant verstärkt den Hautabschnitt vorzugsweise in dem Anbindungsbereich des Hautabschnitt an den Zugstreben. Dabei nimmt der Spant die im Wesentlichen senkrecht zu dem Hautabschnitt wirkenden Zuglastkomponenten aus den Zugstreben auf. Die Druckdichtigkeit der Struktur ergibt sich aus der druckdichten Verbindung zwischen Druckkalotte, Spant und Hautabschnitt. Die sich aus der Druckdichtigkeit ergebenden Lasten werden vorzugsweise zum größten Teil von der Druckkalotte mittels der Zugstreben in den Hautabschnitt weitergeleitet. Der Verbindungsbereich zwischen Druckkalotte, Spant und Haut weist vorzugsweise eine gegenüber der Druckkalotte kleine Fläche auf und muss daher Drucklasten nur zu einem geringen Teil aufnehmen und kann entsprechend einfach ausgebildet werden. Das Vorsehen hochstabiler und komplexer Frästeile für die Verbindung von Druckkalotte, Hautabschnitt und Spant bzw. für den Spant selbst entfällt somit.

Gemäß der erfindungsgemäßen Struktur ist eine elastische Dichtung vorgesehen, welche zwischen dem Spant und der Druckkalotte für einen Toleranzausgleich zwischen diesen angeordnet ist und diese druckdicht miteinander verbindet. Große Bauteile wie die Druckkalotte unterliegen vergleichsweise großen Toleranzschwankungen bei ihrer Herstellung. Vergleichsweise kleine Bauteile wie die Dichtung dagegen unterliegen nur vergleichsweise kleinen Toleranzschwankungen bei ihrer Herstellung. Damit ist es möglich, zunächst die Druckkalotte herzustellen, wobei Toleranzschwankungen in Kauf genommen werden, und anschließend die Dichtung passgenau herzustellen, so dass die Dichtung für einen Toleranzausgleich zwischen dem Spant und der Druckkalotte sorgt.

In den Unteransprüchen finden sich vorteilhafte Ausgestaltungen und Verbesserungen der Erfindung.

Gemäß einer bevorzugten Weiterbildung der erfindungsgemäßen Struktur weist der Spant einen Außengurt auf, welcher an dem Hautabschnitt befestigt ist. Die Befestigung kann mittels beispielsweise Klebstoff und/oder Nieten erfolgen. Vorzugsweise weist der Spant einen Steg auf, welcher sich im Wesentlichen senkrecht von dem Außengurt in radialer Richtung hin zu einer Mittelachse des Hautabschnitts bzw. der Rumpftonne erstreckt.

Gemäß einer weiter bevorzugten Weiterbildung der erfindungsgemäßen Struktur weist der Spant einen Innengurt und/oder einen Steg auf, an welchem die Dichtung befestigt ist. Vorzugsweise ist der Steg wie vorstehend beschrieben ausgebildet und verbindet den Innengurt mit dem Außengurt, wobei der Innen- und Außengurt voneinander beabstandet und im Wesentlichen parallel zueinander in Umfangsrichtung bezogen auf eine Mittelachse des Hautabschnitts bzw. der Rumpftonne verlaufen. Zweckmäßig ist es beispielsweise, den Spant als C-Profilspant auszubilden. Vorzugsweise sind der Innen- und. Außengurt dabei parallel zu einem Rand des Hautabschnitts und/oder zu einem Rand der Dichtung bzw. einem Randbereich der Druckkalotte ausgerichtet. Der Außen- und/oder Innengurt und/oder Steg bilden vorzugsweise jeweils breite und einfach zugängliche Flächen aus, welche eine einfache Befestigung des Hautabschnitts und/oder der Dichtung erlauben. Vorzugsweise erstreckt sich die Dichtung in Umfangsrichtung bezogen auf eine Mittelachse des Hautabschnitts bzw. der Rumpftonne an dem Innengurt und/oder an dem Steg entlang und ist vorzugsweise an einem dieser oder an beiden angeklebt.

Gemäß einer weiter bevorzugten Weiterbildung der erfindungsgemäßen Struktur ist der Hautabschnitt als ringförmiges Hautsegment, die Öffnung als Querschnittsöffnung des ringförmigen Hautsegments und der Spant als Ringspant ausgebildet. Diese Weiterbildung ist für den Fall, dass die Struktur Teil einer Rumpfstruktur eines Luft- oder Raumfahrzeugs ist, besonders vorteilhaft. Der Ringspant verhindert vorteilhaft ein Einschnüren des ringförmigen Hautsegments an der Stelle, an welcher diese mit den Zugstreben verbunden ist. Dabei nimmt der Ringspant im Wesentlichen lediglich radiale Kräfte aus den Zugstreben bzw. aus dem Hautsegment auf. Mit "ringförmigem Hautsegment" ist vorliegend vorzugsweise eine Rumpftonne gemeint.

Gemäß einer weiteren bevorzugten Weiterbildung der erfindungsgemäßen Struktur ist wenigstens ein Abstützelement vorgesehen, welches den Spant an dem Hautabschnitt abstützt. Insbesondere für den Fall, dass die Druckkalotte bzw. die Dichtung an dem Innengurt oder an dem Steg innengurtseitig befestigt ist, leiten diese unter Umständen resultierend aus der Druckdifferenz Biegemomente in den Spant um dessen Längsachse ein. Diesen Biegemomenten kann einfach mittels des wenigstens einen Abstützelements entgegengewirkt werden, da es ansonsten zu einem Umknicken des Spants kommen könnte.

Gemäß einer bevorzugten Weiterbildung der erfindungsgemäßen Struktur verbinden die Zugstreben die Druckkalotte jeweils direkt mit dem Hautabschnitt. Mit "direkt" ist gemeint, dass jede der Zugstreben wenigstens zwei Befestigungsbereiche aufweist, wobei der eine Befestigungsbereich gegen den Hautabschnitt und der andere Befestigungsbereich gegen die Druckkalotte anliegend befestigt ist. Die Befestigung erfolgt vorzugsweise mittels Nieten und/oder Klebstoff. Dabei können vorteilhaft gegenüber einer indirekten Verbindung Bauteile eingespart werden. Allerdings ist eine solche indirekte Verbindung genauso gut möglich, und bietet andere Vorteile, wie nachstehend noch aufgezeigt wird.

Bei einer weiter bevorzugten Weiterbildung der erfindungsgemäßen Struktur weisen die Zugstreben jeweils einen hautseitigen Abschnitt auf, welcher zwischen dem Spant und dem Hautabschnitt verläuft und an wenigstens dem Hautabschnitt befestigt ist. Dabei ist der hautseitige Abschnitt jeweils einer Zugstrebe im Wesentlichen parallel zu dem Hautabschnitt ausgerichtet. Damit ergibt sich eine im Wesentlichen parallele Krafteinleitung der Zugkräfte in den Hautabschnitt. Da der Hautabschnitt gerade in dieser Richtung, also in seiner Ebene, eine sehr hohe Festigkeit bzw. Steifigkeit aufweist, kann dieser entsprechend dünn ausgebildet werden, wodurch Gewicht eingespart werden kann.

Vorzugsweise sind die Zugstreben jeweils nicht nur mit dem Hautabschnitt sondern auch mit den Spanten, insbesondere mit dem Außengurt, verbunden. Vorzugsweise werden der hautseitige Abschnitt jeweils einer zugstrebe, der Spant und die Haut mit demselben Befestigungsmittel, insbesondere Nieten, verbunden. Dies führt zur weiteren Bauteileinsparung.

Gemäß einer weiter bevorzugten Weiterbildung der erfindungsgemäßen Struktur weisen die Zugstreben jeweils einen gegenüber dem hautseitigen Abschnitt abgewinkelten Abschnitt auf, welcher sich zu der Druckkalotte hin erstreckt. Der Winkel zwischen dem hautseitigen Abschnitt und dem abgewinkelten Abschnitt der Zugstreben beträgt beispielsweise 100 bis 170°, vorzugsweise 120 bis 150°. Die Druckkalotte ist vorzugsweise kleiner dimensioniert als die druckdicht abzuschließende öffnung in des Hautabschnitts, um zwischen Druckkalotte und Hautabschnitt weiterhin den Spant und/oder die Dichtung anzuordnen. Damit ergibt sich, dass der an der Druckkalotte befestigte druckkalottenseitigen Abschnitt einer jeden Zugstrebe unter einem Winkel zu dem Hautabschnitt verlaufend ausgebildet sein muss. Um nun die Zuglasten parallel in dem Hautabschnitt einleiten zu können, weist die Zugstrebe vorteilhaft den gegenüber dem hautseitigen Abschnitt abgewinkelten Abschnitt auf. Somit kann eine sowohl platztechnisch als auch kraftflussmäßig optimierte Struktur erzielt werden.

Gemäß einer weiter bevorzugten Weiterbildung der erfindungsgemäßen Struktur weisen die Zugstreben jeweils einen sich an den abgewinkelten Abschnitt anschließenden druckkalottenseitigen Abschnitt auf, welcher an der Druckkalotte niederdruckseitig befestigt ist. Mit "niederdruckseitig" ist die Seite der Druckkalotte gemeint, an welcher der niedrigere der beiden auf die Druckkalotte an ihren gegenüberliegenden Seiten wirkenden Drücke wirkt. Im Flugzeug entspricht die Niederdruckseite der Seite, an welcher der atmosphärische Druck in der Flugphase anliegt. Dies bedingt, dass der sich an den abgewinkelten Abschnitt anschließende druckkalottenseitige Abschnitt einer jeden Zugstrebe bezüglich des hautseitigen Abschnitts einer jeden Zugstrebe die Druckkalotte hintergreift.

Gemäß einer weiter bevorzugten Weiterbildung der erfindungsgemäßen Struktur weist die Zugstrebe im Wesentlichen eine Löffelform auf, wobei der verbreiternde Abschnitt der Löffelform den druckkalottenseitigen Abschnitt der Zugstrebe ausbildet. In dem Bereich des verbreiterten Abschnitts der Löffelform wird die Zugstrebe mit der Druckkalotte vorzugsweise vernietet. Aus den für das Nieten in die Zugstrebe einzubringenden Löchern ergibt sich eine materialtechnische Schwächung der Zugstrebe, die aber mittels dieser Weiterbildung kompensiert wird.

Gemäß einer weiter bevorzugten Weiterbildung der erfindungsgemäßen Struktur ist der Außengurt des Spants mit einem Radius ausgebildet, gegen den die Zugstrebe im Übergangsbereich zwischen hautseitigem und abgewinkelten Abschnitt anliegt. Damit wird die Spannungskonzentration in dem Übergangsbereich der Zugstrebe reduziert.

Gemäß einer weiter bevorzugten Weiterbildung der erfindungsgemäßen Struktur sind an dem Hautabschnitt und/oder an dem Spant sowie an der Druckkalotte jeweils mehrere Beschläge angebracht, wobei jeweils eine Zugstrebe jeweils einen der haut- und/oder spantseitigen Beschläge mit jeweils einem der druckkalottenseitigen Beschläge verbindet. Vorzugsweise ist jede der Zugstreben mit ihrem einen Ende mit dem druckkalottenseitigen Beschlag und mit ihrem anderen Ende mit dem haut- und/oder spantseitigen Beschlag form- und/oder kraftschlüssig, insbesondere lösbar, verbindbar. Damit ergibt sich eine gegenüber stoffschlüssigen Verbindungen vereinfachte Montage der Zugstreben an der Druckkalotte bzw. an dem Hautabschnitt und/oder an dem Spant. Auch eine einfache Demontage, insbesondere zu wartungszwecken, ist gewährleistet.

Gemäß einer weiter bevorzugten Weiterbildung der erfindungsgemäßen Struktur sind die Zugstreben an ihrem einen Ende mit dem haut- und/oder spantseitigen Beschlag und an ihrem anderen Ende mit dem druckkalottenseitigen Beschlag gelenkig, insbesondere mittels einer Augen-Bolzen-Verbindung, gekoppelt. Somit ist eine relative Beweglichkeit zwischen der Druckkalotte und dem Spant bzw. dem Hautabschnitt gewährleistet und eine Verspannung zwischen der Druckkalotte und dem Spant bzw. dem Hautabschnitt kann somit vermieden werden. Ferner ist damit eine gleichmäßige Belastung der Zugstreben begünstigt. Außerdem lassen sich die Zugstreben somit einfacher an den jeweiligen Beschlägen montieren. Anstelle der Augen-Bolzen-Verbindung kommt auch beispielsweise eine Kugelkopf-Pfannen-Verbindung und dergleichen in Betracht.

Vorzugsweise sind die Zugstreben starr ausgebildet. Dies ist insbesondere bei einer gelenkigen Verbindung derselben mit den haut- und/oder spantseitigen Beschlägen bzw. druckkalottenseitigen Beschlägen vorteilhaft, da in diesem Fall keine Biegemomente in die Zugstreben eingeleitet werden und gleichzeitig mittels der starr ausgebildeten Zugstreben die Druckkalotte bezüglich des Spants bzw. des Hautabschnitts in Position gehalten wird.

Gemäß einer weiter bevorzugten Weiterbildung der erfindungsgemäßen Struktur sind die Zugstreben in ihrer Länge verstellbar ausgebildet. Somit können die Zugstreben auch dazu dienen, Toleranzschwankungen bei der Montage der Struktur auszugleichen.

Gemäß einer weiter bevorzugten Weiterbildung der erfindungsgemäßen Struktur ist die Dichtung aus Gummi ausgebildet. Somit kann die Dichtung für einen Toleranzausgleich zwischen der Druckkalotte und dem Spant und/oder dem Hautabschnitt sorgen.

Gemäß einer weiter bevorzugten Weiterbildung der erfindungsgemäßen Struktur ist die Dichtung als ein umlaufender Gummischlauch ausgebildet, welcher eine Hochdruck- und eine Niederdruckseite aufweist, wobei der Gummischlauch hochdruckseitig mit wenigstens einer Öffnung versehen und zwischen dem Spant und/oder dem Hautabschnitt sowie der Druckkalotte angeordnet ist, wobei sich der Gummischlauch auf Grund der Druckdifferenz verstärkt gegen den Spant und/oder den Hautabschnitt sowie die Druckkalotte für einen druckdichteren Abschluss presst. Mit "hochdruckseitig" ist die Seite der Dichtung gemeint, an welcher der höhere der beiden auf die Dichtung an ihren gegenüberliegenden Seiten wirkenden Drücke wirkt. Mit "niederdruckseitig" ist die Seite der Dichtung gemeint, an welcher der niedrigere der beiden auf die Dichtung an ihren gegenüberliegenden Seiten wirkenden Drücke wirkt. Insbesondere ist mit "niederdruckseitig" die Seite gemeint, auf welche der atmosphärische Außendruck wirkt und mit "hochdruckseitig" die Seite gemeint, auf welche der Kabineninnendruck wirkt.

Die Streben sind vorzugsweise länglich ausgebildet und weisen vorzugsweise einen kreisförmigen oder ringförmigen Querschnitt auf. Ferner sind die Zugstreben in ihrer Länge verstellbar ausgebildet. Zudem weisen die Zugstreben jeweils einen ersten Strebenabschnitt mit einem ersten Gewindeabschnitt und einem zweiten Strebenabschnitt mit einem zweiten Gewindeabschnitt auf, wobei die Länge jeder Zugstrebe mittels Ineinander- oder Auseinanderschrauben der beiden Gewindeabschnitte veränderbar ist.

Vorzugsweise ist die Druckkalotte als mehrfach-gekrümmte Schale, insbesondere als Kugelabschnitt, ausgebildet. Daraus ergibt sich eine sehr günstige Spannungsverteilung in dieser.

Vorzugsweise ist die Druckkalotte als formstabiles Bauteil ausgebildet, d.h. sie behält auch dann ihre Form bei, wenn im Betrieb des Luft- oder Raumfahrzeugs der Kabinendruck gleich oder sogar geringfügig unterhalb des atmosphärischen Außendrucks liegt. Der letzter Fall kann beispielsweise dann eintreten, wenn das Hilfstriebwerk (APU) auf Grund eines Schadens Druckluft in die Heckspitze und damit auf die Druckkalotte bläst.

Bevorzugt weist die Druckkalotte einen Kohlenstofffaserkunststoff (CFK) auf. Dies ist im Hinblick auf ein geringes Gewicht der Struktur günstig.

Bevorzugt sind die Zugstreben aus Titan, Stahl oder CFK ausgebildet, da sie sehr hohe Lasten aufnehmen müssen. Weiter können die Zugstreben derart flexibel ausgebildet sein, sodass sie im Wesentlichen keine Biegemomente aufnehmen können. Vorzugsweise ist die Dichtung aus CFK oder Aluminum bzw. einer Aluminiumlegierung ausgebildet, da sich somit Gewichtsvorteile ergeben.

Die Erfindung wird im Folgenden anhand eines Ausführungsbeispiels unter Bezugnahme auf die beiliegenden Figuren näher erläutert.

Von den Figuren zeigen:
- Fig. 1: in einer perspektivischen Ansicht eine Struktur ge- mäß einem Ausführungsbeispiel der vorliegenden Er- findung;
- Fig. 2: einen Schnitt A-A aus Fig. 1;
- Fig. 3: eine perspektivische Ansicht B aus Fig. 1;
- Fig. 4: in einer perspektivischen Ansicht eine Struktur ge- mäß einem weiteren Ausführungsbeispiel der vorlie- genden Erfindung; und
- Fig. 5: eine Ansicht C aus Fig. 4.

In den Figuren bezeichnen gleiche Bezugszeichen gleiche oder funktionsgleiche Komponenten, soweit nichts Gegenteiliges angegeben ist.

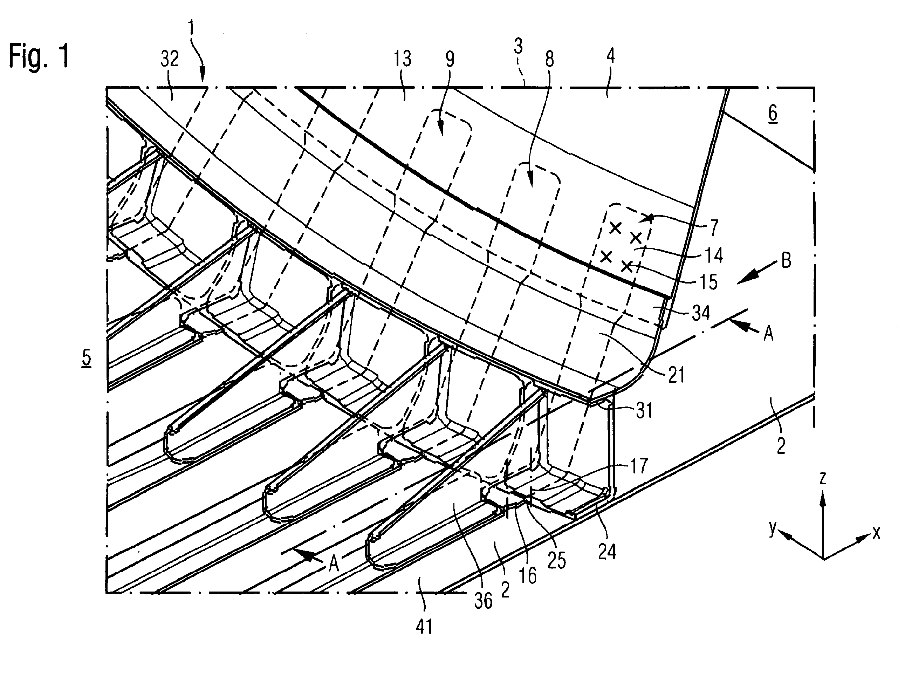

Anhand der Fig. 1 bis 3 wird nachfolgend ein Ausführungsbeispiel der vorliegenden Erfindung näher erläutert.

Die Struktur 1 ist als eine Rumpfstruktur eines Flugzeugs ausgebildet.

Vorliegend wird ein Koordinatensystem mit x, y und z-Achse verwendet, wobei die (positive) x-Richtung die Flugzeugslängsrichtung, von der Flugzeugnase zum Flugzeugheck weisend, die (positive) y-Richtung die Flugzeugquerrichtung, in einer Vorderansicht des Flugzeugs von rechts nach links weisend, und die (positive) z-Richtung die Flugzeugshochrichtung angibt.

Die Rumpfstruktur 1 weist einen Hautabschnitt 2 auf, welcher als ein ringförmiges Hautsegment ausgebildet ist. Das ringförmige Hautsegment 2 bildet die Außenschale einer sogenannten Rumpftonne des Flugzeugs und ist vorzugsweise aus CFK und/oder GLARE ® und/oder einer Aluminiumlegierung gebildet.

Das ringförmige Hautsegment 2 weist eine Öffnung 3 auf, welche als eine Querschnittsöffnung in der y-z Ebene ausgebildet ist. Die Querschnittsöffnung 3 wird von einer Druckkalotte 4 druckdicht verschlossen. Die Druckkalotte 4 unterteilt den Rumpf des Flugzeugs in einen Kabinenbereich 5 für eine Druckbeaufschlagung während der Flugphase und einem nicht-druckbeaufschlagten Heckbereich 6, in welchem gewöhnlich der atmosphärische Außendruck herrscht.

Die Druckkalotte 4 ist mittels mehrerer Zugstreben (beispielhaft mit den Bezugszeichen 7, 8, 9 bezeichnet) an der Innenseite, also der dem Kabinenbereich 5 zugewandten Seite, des ringförmigen Hautsegments 2 verbunden. Die Druckkalotte 4 weist vorzugsweise die Form eines Kugelabschnitts auf, wobei sie sich in Richtung des Heckbereichs 6 (also in x-Richtung) wölbt. Die Druckkalotte 4 ist vorzugsweise aus CFK hergestellt.

Aufbau und Funktion der Zugstreben 7, 8, 9 soll nachfolgend am Beispiel der zugstrebe 7 erläutert werden.

Die Zugstrebe 7 ist vorzugsweise streifenförmig mit einem rechtwinkeligen Querschnitt ausgebildet, welcher durch ein großes Verhältnis von Breite zu Dicke des Querschnitts, beispielsweise 20:1, gekennzeichnet ist. Damit ergibt sich eine vergleichsweise hohe Flexibilität der Zugstrebe 7 um die y-Achse. Die Zugstrebe 7 ist vorzugsweise aus Titan oder Stahl für eine hohe Stabilität entlang der Längsachse derselben gebildet.

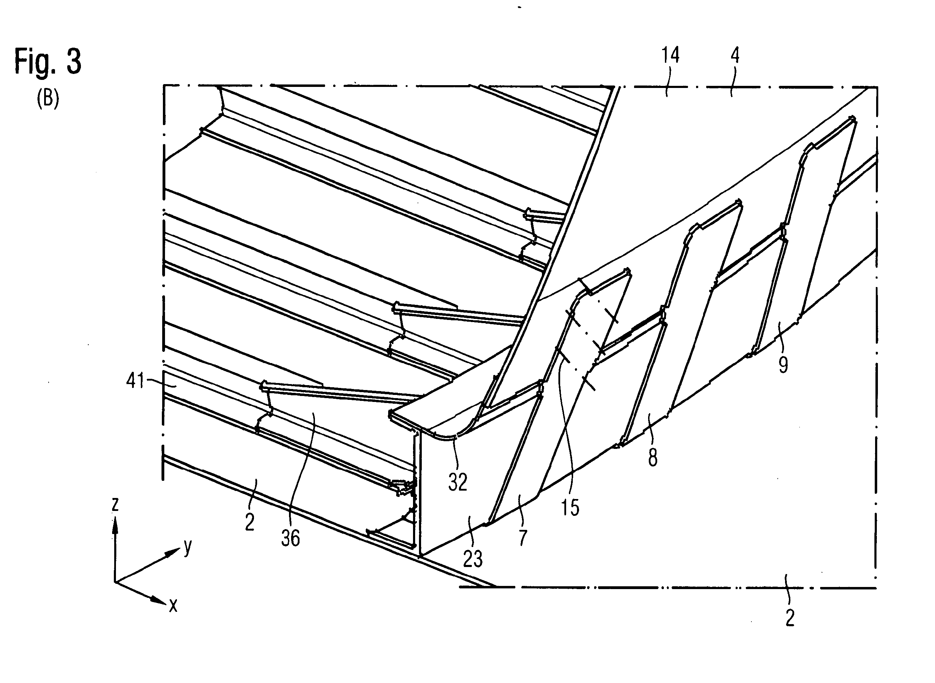

Die Zugstrebe 7 weist einen druckkalottenseitigen Abschnitt 14 (siehe auch Fig. 3) auf, mittels dem sie bevorzugt mittels Nieten (beispielhaft mit dem Bezugszeichen 15 bezeichnet) und/oder Klebstoff mit einem ringförmigen Randbereich 13 der Druckkalotte 4 an deren Außenseite, also der dem Heckbereich 6 zugewandten Seite, verbunden ist. Die Zugstreben 7 weist dabei in etwa eine Löffelform in einer Draufsicht, wie in etwa aus Fig. 1 ersichtlich, auf. In dem sich verbreitenden Bereich 14 erfolgt die Befestigung des druckkalottenseitigen Endes der Zugstrebe 7 an der Druckkalotte 4.

An ihrem dem druckkalottenseitigen Abschnitt 14 gegenüberliegenden hautseitigen Abschnitt 16 ist die Zugstrebe 7 vorzugsweise mittels Nieten (beispielhaft mit dem Bezugszeichen 17 bezeichnet) und/oder Klebstoff mit dem Hautsegment 2 verbunden. Der hautsegmentseitige Abschnitt 16 der Zugstrebe 7 liegt in etwa flächig, also parallel, an dem Hautsegment 2 an.

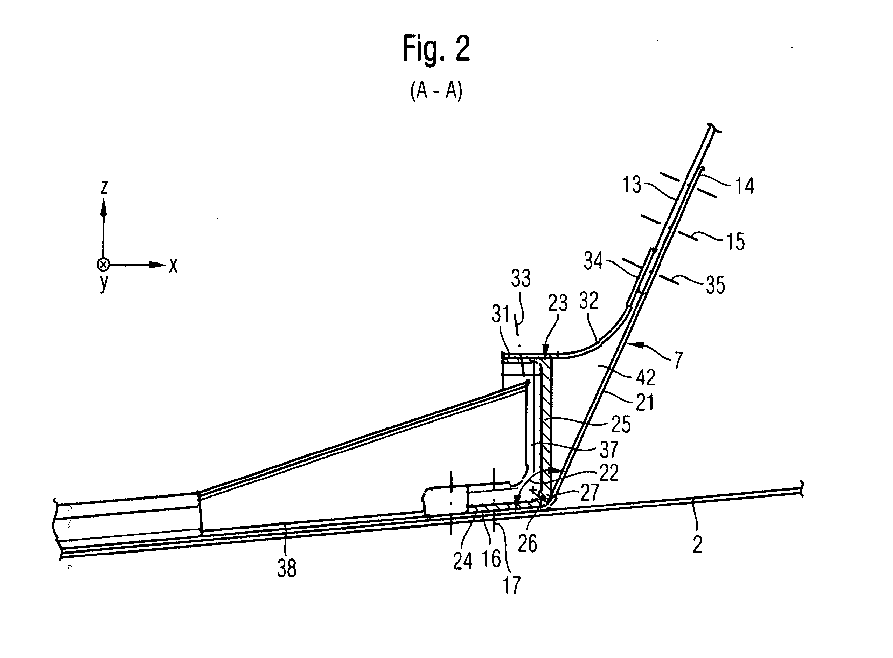

An den hautseitigen Abschnitt 16 der Zugstrebe 7 schließt sich ein gegenüber diesem abgewinkelter Abschnitt 21 der Zugstrebe 7 an, welcher den hautseitigen Abschnitt 16 mit dem druckkalottenseitigen Abschnitt 14 verbindet. Der Winkel 22, siehe Fig. 2, zwischen dem hautsegmentseitigen Abschnitt 16 und dem abgewinkelten Abschnitt 21 beträgt in etwa 90 bis 180°, vorzugsweise 110 bis 150°.

Die Rumpfstruktur 1 weist ferner einen Spant 23 auf, welcher als Ringspant mit einem vorzugsweise in etwa C-förmigen Querschnitt ausgebildet ist und sich entlang der Innenseite des ringförmigen Hautsegments 2 umfangsmäßig erstreckt. Der Ringspant 23 ist mit einem Außengurt 24 ausgebildet, welcher an dem Hautsegment 2 vorzugsweise mittels der Nieten 17 befestigt ist. Dabei ist der Außengurt 24 mit mehreren Taschen (beispielhaft mit dem Bezugszeichen 25 versehen) ausgebildet, durch welche sich der hautseitige Abschnitt 16 der Zugstrebe 7 hindurch erstreckt.

An den Außengurt 24 schließt sich ein Steg 25 an, welcher sich radial und umfangsmäßig bezüglich des ringförmigen Hautsegments 2 sowie abgewinkelt zu dem Außengurt 24 erstreckt. Zwischen dem Außengurt 24 und dem Steg 25 ist der Ringspant 23 mit einem Radius 26 gebildet, an welchem die Zugstrebe 7 in ihrem Übergangsbereich 27 zwischen dem hautseitigen Abschnitt 16 und dem abgewinkelten Abschnitt 21 anliegt. Der Radius 26 liegt vorzugsweise im Bereich zwischen 3 bis 10 mm. An den Steg 25 des Ringspants 23 schließt sich wiederum ein Innengurt 31 abgewinkelt an. Sowohl Außen- als auch Innengurt 24, 31 sind im Wesentlichen konzentrisch zu dem ringförmigen Hautsegment 2 ausgebildet.

An dem Innengurt 31 ist eine Dichtung 32 an ihrem einen Ende druckdicht befestigt, vorzugsweise mittels Nieten (beispielhaft mit dem Bezugszeichen 33 versehen) und/oder Klebstoff. An ihrem anderen Ende ist die Dichtung 32 an einem ringförmigen Randbereich 34 der Druckkalotte 4 an deren Innenseite, also der dem Heckbereich 6 zugewandten Seite, druckdicht befestigt, vorzugsweise mittels Nieten (beispielhaft mit dem Bezugszeichen 35 versehen) und/oder Klebstoff. Der Randbereich 34 ist dabei weiter von einem Mittelpunkt der Druckkalotte 4 beabstandet angeordnet als der Randbereich 13 zur Befestigung der Zugstrebe 7. Die Dichtung ist vorzugsweise aus CFK und/oder einer Aluminiumlegierung gebildet.

Weiterhin sind Abstützelemente (beispielhaft mit dem Bezugszeichen 36 versehen) vorgesehen, welche als Winkel ausgebildet sind. Der Winkel 36 erstreckt sich entlang der Längsachse (x-Achse) des ringförmigen Hautsegments 2 und radial bezüglich desselben. Der Winkel 36 ist an seiner Kathete 37 mit dem Ringspant 23 und an seiner Kathete 38 mit einem Stringer 41 verbunden, vorzugsweise vernietet. Der Stringer erstreckt sich längs des Hautsegments 2 (x-Achse) und ist mit diesem vernietet und/oder verklebt.

Im Anschluss an diese im Wesentlichen konstruktive Beschreibung soll nachfolgend kurz auf die der Struktur gemäß den Fig. 1 bis 3 zugrundeliegende Wirkungsweise eingegangen werden.

Während der Flugphase herrscht ein Innendruck in dem Kabinenbereich 5, welcher deutlich über dem atmosphärischen Außendruck in dem Heckbereich 6 liegt. Der allergrößte Teil der Querschnittsöffnung 3 wird von der Druckkalotte 4 verschlossen. Dabei wirken erhebliche Druckkräfte auf die Druckkalotte 4, wobei die resultierende Druckkraft auf die Druckkalotte 4 in x-Richtung wirkt. Daraus ergeben sich Zuglasten in den Zugstreben 7, 8, 9, welche im Wesentlichen entlang dieser wirken. Die Zugstreben 7, 8, 9 sind derart ausgebildet, dass sie entlang ihrer Längsachse hoch belastbar sind und im Wesentlichen keine Biegemomente aufnehmen können, d.h. um die y-Achse flexibel ausgebildet sind. Lokale Spannungskonzentrationen in dem Übergangsabschnitt 27 werden dadurch vermieden, dass der Ringspant 23 mit dem Radius 26 ausgebildet ist. Die in dem druckkalottenseitigen Abschnitt 14 in die Zugstrebe 7 eingeleiteten Lasten werden im Wesentlichen parallel, also in x-Richtung wirkend, in das ringförmige Hautsegment 2 eingeleitet, wobei radiale Lasten in dem hautseitigen Abschnitt 16 der Zugstrebe 7 in dem Ringspant 23 aufgenommen werden, welcher eine radiale Einschnürung des ringförmigen Hautsegments 2 somit verhindert. Die Abdichtung des Bereichs 42 zwischen der Druckkalotte 4 und dem Ringspant 23 erfolgt mittels der Dichtung 32, welche im Vergleich zu der Druckkalotte 4 klein ausgebildet ist. Die Dichtung 32 muss dabei lediglich die vergleichweise geringen Druckkräfte aufnehmen, welche aus dem auf ihr lastenden Innendruck resultieren. Sie muss dagegen nicht die großen auf die Druckkalotte 4 wirkenden Druckkräfte aufnehmen. Damit kann die Dichtung 32 vergleichsweise dünnwandig und einfach ausgebildet werden. Außerdem erlaubt die Dichtung 32 einen einfachen Toleranzausgleich zwischen der Druckkalotte 4 und dem Ringspant 23, da sie eben mittels der Erfindung im vergleich zu der Druckkalotte 4 klein und einfach ausgestaltet werden kann und sich daher einfach an Toleranzabweichungen der Druckkalotte 4 bzw. des Ringspants 23 anpassen lässt.

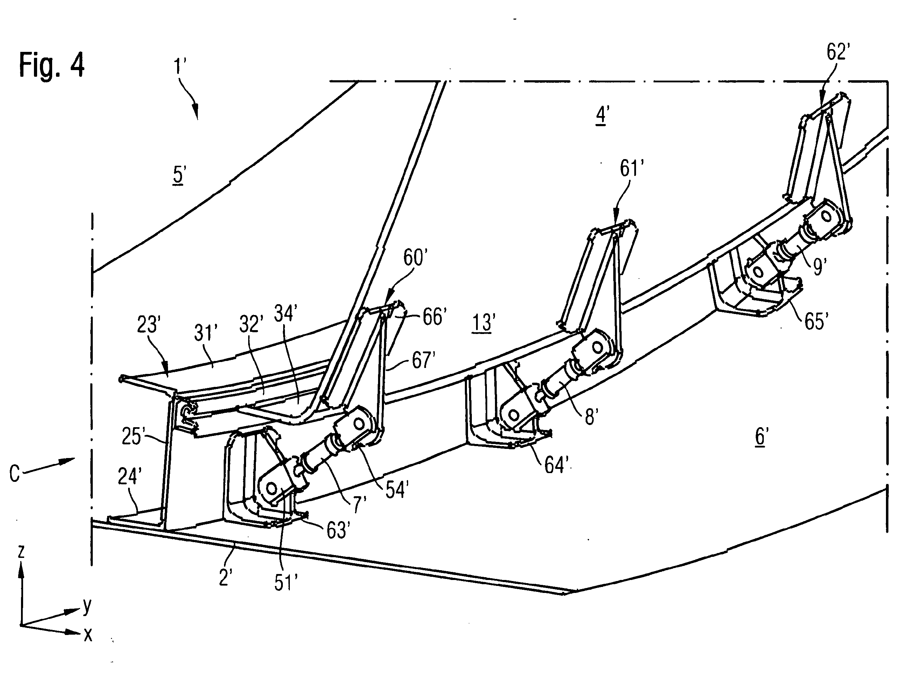

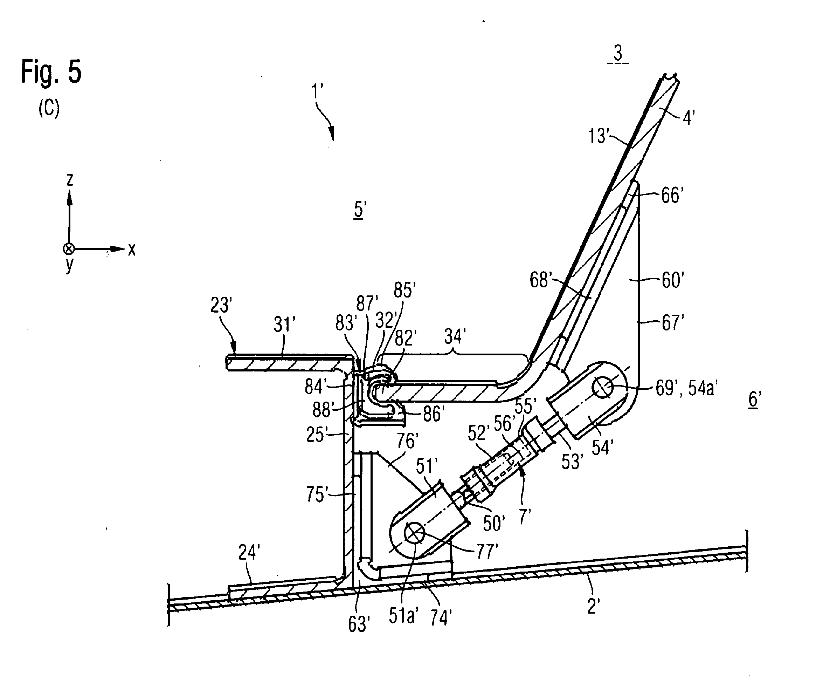

Fig. 4 zeigt eine perspektivische Ansicht einer Struktur 1' gemäß einem weiteren Ausführungsbeispiel der vorliegenden Erfindung. Fig. 5 zeigt eine vergrößerte Ansicht C aus Fig. 4.

Zur Unterscheidung zwischen dem Ausführungsbeispiel gemäß den Fig. 1 bis 3 und dem Ausführungsbeispiel gemäß den Fig. 4 und 5 sind die Bezugszeichen des letzteren Ausführungsbeispiels jeweils mit "'" gekennzeichnet. Zahlenmäßig übereinstimmende Bezugszeichen zwischen dem Ausführungsbeispiel gemäß den Fig. 1 bis 3 und dem Ausführungsbeispiel gemäß den Fig. 4 und 5, beispielsweise 1 und 1', bezeichnen gleiche Komponenten oder wenigstens funktional übereinstimmende Komponenten.

Nachfolgend werden lediglich die Einzelheiten des Ausführungsbeispiels gemäß den Fig. 4 und 5 näher erläutert, in denen dieses sich von dem Ausführungsbeispiel gemäß den Fig. 1 bis 3 unterscheidet.

Jede der Zugstreben 7' bis 9' weist den nachfolgend beispielhaft anhand der Zugstrebe 7' erläuterten Aufbau auf.

Die Zugstrebe 7' weist einen ersten Strebenabschnitt 50', s. Fig. 5, auf, welcher an seinem einen Ende einen Gabelkopf 51' mit einem Auge 51a' trägt und an seinem anderen Ende mit einem Außengewinde 52' ausgebildet ist. Die Strebe 7' weist weiterhin einen zweiten Strebenabschnitt 53' auf, welcher an seinem einen Ende einen Gabelkopf 54' mit einem Auge 54a' und an seinem anderen Ende eine Hülse 55' trägt. Die Hülse 55' ist mit einem Innengewinde 56' vorgesehen, in welches das Auβengewinde 52' des ersten Strebenabschnitts 50' für ein formschlüssiges Verbinden des ersten und zweiten Strebenabschnitts 50', 53' einschraubbar ist.

Im Unterschied zu dem Ausführungsbeispiel gemäß den Fig. 1 bis 3 sind bei dem Ausführungsbeispiel gemäß den Fig. 4 und 5 erste Beschläge 60', 61', 62' in dem Randbereich 13' der Druckkalotte 4', insbesondere mittels Klebens und/oder Nietens, angebracht. Ferner sind zweite Beschläge 63', 64', 65' an dem Hautabschnitt 2' und an dem Steg 25', insbesondere mittels Klebens und/oder Nietens, angebracht.

Die ersten Beschläge 60', 61' und 62' weisen vorzugsweise jeweils einen vorzugsweise im Wesentlichen rechtwinkligen Plattenabschnitt 66' auf (nachfolgend beispielhaft für den Beschlag 60' näher erläutert), welcher an dem Randabschnitt 13' angebracht ist, und einen im Wesentlichen dreiecksförmigen Abschnitt 67', welcher an einer seiner Katheten 68' an dem rechtwinkligen Plattenabschnitt 66' angebracht ist und sich im Wesentlichen senkrecht zu diesem erstreckt, wobei der dreiecksförmige Plattenabschnitt 67' der Kathete 68' gegenüberliegend ein Auge 69' (im Wesentlichen Deckungsgleich mit dem Auge 54a' in Fig. 5) aufweist. Mittels eines Bolzens, welcher durch die Augen 54a' und 69' geführt wird, ist der Beschlag 60' mit der Zugstrebe 7' insbesondere lösbar verbindbar.

Die zweiten Beschläge 63', 64' und 65' sind jeweils vorzugsweise als Winkel ausgebildet und weisen dabei (nachfolgend beispielhaft für den Beschlag 63' näher erläutert) eine erste Schenkelplatte 74', welche an dem Hautabschnitt 2' angebracht ist, und eine sich zu dieser im Wesentlichen rechtwinklig erstreckende zweiten Schenkelplatte 75' auf, welcher an dem Steg 25' des Spants 23' angebracht ist. Eine im Wesentlichen trapezförmige Platte 76' ist jeweils senkrecht auf der ersten und zweiten Schenkelplatte 74', 75' stehend an diesen angebracht und weist in etwa mittig ein Auge 77' (im Wesentlichen Deckungsgleich mit dem Auge 51a' in Fig. 5) auf. Mittels eines Bolzens, welcher durch die Augen 51a' und 77' geführt wird, ist der Beschlag 63' mit der Zugstrebe 7' insbesondere lösbar verbindbar.

Im Unterschied zu dem Ausführungsbeispiel gemäß den Fig. 1 bis 3 ist bei dem Ausführungsbeispiel gemäß den Fig. 4 und 5 die Druckkalotte 4' mit dem Randabschnitt 34' vorzugsweise derart gebildet, dass sich dieser im Wesentlichen aus der Vertikalen (Z- bzw. Y -Richtung) in die Horizontale (X-Richtung) krümmt, siehe Fig. 5, und der Randbereich 34' somit einen Ring bildet, welcher sich im Wesentlichen in der X-Richtung erstreckt und vorzugsweise eine Mittelachse aufweist, die identisch mit der Mittelachse des vorzugsweise rumpftonnenförmigen Hautabschnitts 2' ist.

Zwischen einem spantseitigen Rand 82' des Randabschnitt 34' und dem Spant 23' ist vorzugsweise eine als Gummischlauch ausgebildete Dichtung 83' vorgesehen. Die Dichtung 83' ist vorzugsweise in etwa hufeisenförmig ausgebildet und liegt einerseits gegen den Steg 25' an und nimmt andererseits den Rand 82' in sich auf. Vorzugsweise ist die Dichtung 82' an einem ersten Abschnitt 84' an dem Steg 25' befestigt, insbesondere angeklebt. Ein zweiter und dritter Abschnitt 85', 86' umgreifen den Rand 82'. An ihrer dem Kabinenbereich 5' zugewandten Seite weist die Dichtung 83' mehrere Löcher 87' (beispielhaft ist in Fig. 5 lediglich eines dargestellt) auf, welcher einen Innenraum 88' der Dichtung 83' mit dem Kabinenbereich 5 fluidisch verbindet.

Nachfolgend soll kurz die der Struktur gemäß den Fig. 4 und 5 zugrundeliegende Wirkungsweise erläutert werden.

Die ersten Beschläge 60', 61', und 62' können in einem ersten Montagebereich an der Druckkalotte 4' montiert werden. Die zweiten Beschläge 63', 64' können an dem Hautabschnitt 2' bzw. an dem Spant 23' in einem zweiten Montagebereich montiert werden.

Hiernach kann die Druckkalotte 4' mittels der Zugstreben 7', 8', 9' mit dem Hautabschnitt 2' bzw. dem Spant 23' verbunden werden, wobei dabei keine aufwändigen Klebe- oder Nietvorgänge erforderlich sind. Vielmehr kann eine Verbindung einfach dadurch bewirkt werden, dass die nicht dargestellten Bolzen durch die Augen 54a', 69', 51a' und 77' geführt werden und anschließend gegen ein Herausrutschen gesichert werden. Mittels der nicht dargestellten Bolzen sind die Augen 51a', 54a' der Zugstrebe 7' dann scharnierartig mit den Augen 69', 77' des ersten Beschlag 60' bzw. dem zweiten Beschlag 63' verbunden.

Vor oder nach dem Verbinden mittels der Zugstreben 7', 8', 9' kann für einen Ausgleich von Toleranzen, die bei der Fertigung großer Bauteile, wie beispielsweise der Druckkalotte 4' oder dem Hautabschnitt 2', auftreten, dadurch gesorgt werden, dass die Zugstreben 7', 8', 9' mittels Ineinander- oder Auseinanderschraubens der Innen- und Außengewinde 52', 56' verkürzt oder verlängert werden.

Vor oder nach dem Verbinden mittels der Zugstreben 7', 8', 9' kann noch die Dichtung 83' zwischen die Druckkalotte 4' und den Spant 23' eingebracht werden.

Damit die Dichtung 83' überhaupt den Aufbau eines Differenzdrucks ermöglicht, ist diese beispielsweise dichtend an dem Rand 32' und dem Steg 25' vorgesehen. Im Betrieb des Luft- oder Raumfahrzeugs bläst dann der gegenüber dem atmosphärischem Außendruck höhere Kabineninnendruck mittels der Löcher 87' in der Dichtung 83' diese auf, sodass sich diese gegen den Steg 25' einerseits und.gegen den Rand 82' der Druckkalotte 4' andererseits presst, wodurch eine bessere Abdichtung erzielt wird.

Obwohl die Erfindung vorliegend anhand bevorzugter Ausführungsbeispiele beschrieben wurde, ist sie darauf nicht beschränkt, sondern auf vielfältige Art und Weise modifizierbar.

Die vorliegende Erfindung schafft eine Rumpfstruktur eines Flugzeugs mit einem ringförmigen Hautsegment, welches eine Querschnittsöffnung aufweist, einer Druckkalotte für einen druckdichten Abschluss der Querschnittsöffnung und mehreren Zugstreben, welche jeweils die Druckkalotte mit dem ringförmigen Hautsegment verbinden und auf die Druckkalotte wirkende Lasten als Zuglasten aufnehmen. Damit wird vorteilhaft erreicht, dass die Zugstreben im Wesentlichen keine Biegemomente aufnehmen müssen. Dadurch lassen sich diese mit einem kleineren Querschnitt herstellen, woraus sich eine Gewichtseinsparung ergibt. Auch lassen sich solche Zugstreben einfach herstellen und montieren.

### Bezugszeichenliste

- 1: Struktur/Rumpfstruktur
- 2: Hautabschnitt/ringförmiges Hautsegment
- 3: Öffnung/Querschnittsöffnung
- 4: Druckkalotte
- 5: Kabinenbereich
- 6: Heckbereich
- 7: Zugstrebe
- 8: Zugstrebe
- 9: Zugstrebe
- 13: Randbereich
- 14: druckkalottenseitiger Abschnitt
- 15: Niet
- 16: hautseitiger Abschnitt
- 17: Niet
- 21: abgewinkelter Abschnitt
- 22: Winkel
- 23: Spant/Ringspant
- 24: Außengurt
- 25: Steg
- 26: Radius
- 27: Übergangsabschnitt
- 31: Innengurt
- 32: Dichtung
- 33: Niet
- 34: Randbereich
- 35: Niet
- 36: Abstützelement/Winkel
- 37: Kathete
- 38: Kathete
- 41: Stringer
- 42: Bereich
- 50': Strebenabschnitt
- 51': Gabelkopf
- 51a': Auge
- 52': Außengewinde
- 53': Strebenabschnitt
- 54': Gabelkopf
- 54a': Auge
- 55': Hülse
- 56': Innengewinde
- 60': erster Beschlag
- 61': erster Beschlag
- 62': erster Beschlag
- 63': zweiter Beschlag
- 64': zweiter Beschlag
- 65': zweiter Beschlag
- 66': rechteckige Platte
- 67': dreiecksförmige Platte
- 68': Kathete
- 69_{'}: Auge
- 74': Schenkelplatte
- 75': Schenkelplatte
- 76': trapezförmige Platte
- 77': Auge
- 82': Rand
- 83': Dichtung
- 84': erster Abschnitt
- 85': zweiter Abschnitt
- 86': dritter Abschnitt
- 87': Loch
- 88': Innenraum

## Patentansprüche

1. Struktur (1; 1'), insbesondere eine Rumpfstruktur eines Luft- oder Raumfahrzeugs, mit:
einem Hautabschnitt (2; 2'), welcher eine Öffnung (3; 3') aufweist;
einer Druckkalotte (4; 4') für einen druckdichten Abschluss der Öffnung (3; 3');
mehreren Zugstreben (7, 8, 9; 7', 8', 9'), welche jeweils die Druckkalotte (4; 4') mit dem Hautabschnitt (2; 2') verbinden und auf die Druckkalotte (4; 4') wirkende Lasten als Zuglasten aufnehmen; und
einem Spant (23; 23'), welcher mit dem Hautabschnitt (2; 2') und der Druckkalotte (4; 4') druckdicht verbunden ist; **gekennzeichnet durch**
eine elastische Dichtung (32; 32'), welche zwischen dem Spant (23; 23') und der Druckkalotte (4; 4') für einen Toleranzausgleich zwischen diesen angeordnet ist und diese druckdicht miteinander verbindet.

2. Struktur nach Anspruch 1,
**dadurch gekennzeichnet,**
**dass** der Spant (23; 23') einen Außengurt (24; 24') aufweist, welcher an dem Hautabschnitt (2; 2') befestigt ist.

3. Struktur nach Anspruch 1 oder 2,
**dadurch gekennzeichnet,**
**dass** der Spant (23; 23') einen Innengurt (31; 31') und/oder einen Steg (25; 25') aufweist, an welchem die Dichtung (32; 32') befestigt ist.

4. Struktur nach wenigstens einem der vorhergehenden Ansprüche,
**dadurch gekennzeichnet,**
**dass** der Hautabschnitt (2; 2') als ringförmiges Hautsegment, die Öffnung als Querschnittsöffnung (3; 3') des ringförmigen Hautsegments und der Spant (23; 23') als Ringspant ausgebildet ist.

5. Struktur nach wenigstens einem der Ansprüche 1 bis 4,
**dadurch gekennzeichnet,**
**dass** wenigstens ein Abstützelement (36) vorgesehen ist, welches den Spant (23) an dem Hautabschnitt (2) abstützt.

6. Struktur nach wenigstens einem der vorhergehenden Ansprüche,
**dadurch gekennzeichnet,**
**dass** die Zugstreben (7, 8, 9) die Druckkalotte (4) mit dem Hautabschnitt (2) direkt verbinden.

7. Struktur nach Anspruch 6,
**dadurch gekennzeichnet,**
**dass** die Zugstreben (7, 8, 9) jeweils einen hautseitigen Abschnitt (16) aufweisen, welcher zwischen dem Spant (23) und dem Hautabschnitt (2) verläuft und an dem Hautabschnitt (2) oder an dem Hautabschnitt (2) und dem Spant (23) befestigt ist.

8. Struktur nach Anspruch 7,
**dadurch gekennzeichnet,**
**dass** die Zugstrebe (7, 8, 9) jeweils einen gegenüber dem hautseitigen Abschnitt (16) abgewinkelten Abschnitt (21) aufweisen, welcher sich zu der Druckkalotte (4) hin erstreckt.

9. Struktur nach Anspruch 8,
**dadurch gekennzeichnet,**
**dass** die Zugsstreben (7, 8, 9) jeweils einen sich an den abgewinkelten Abschnitt (21) anschließenden druckkalottenseitigen Abschnitt (14) aufweisen, welcher an der Druckkalotte (4) niederdruckseitig befestigt ist.

10. Struktur nach Anspruch 9,
**dadurch gekennzeichnet,**
**dass** die Zugstreben (7, 8, 9) jeweils im Wesentlichen eine Löffelform aufweisen, wobei der verbreiternde Abschnitt der Löffelform den druckkalottenseitigen Abschnitt (14) einer jeden Zugstrebe (7, 8, 9) ausbildet.

11. Struktur nach wenigstens einem der Ansprüche 8 bis 10,
**dadurch gekennzeichnet,**
**dass** der Außengurt (24) des Spants (23) mit einem Radius (26) ausgebildet ist, gegen den die Zugstrebe (7, 8, 9) im Übergangsbereich (27) zwischen hautseitigem und abgewinkeltem Abschnitt (16, 21) anliegt.

12. Struktur nach wenigstens einem der Ansprüche 1 bis 4,
**dadurch gekennzeichnet,**
**dass** an dem Hautabschnitt (2') und/oder dem Spant (23') sowie an der Druckkalotte (4') jeweils mehrere Beschläge (63', 64', 65') angebracht sind, wobei jeweils eine Zugstrebe (7', 8', 9') jeweils einen der haut- und/oder spantseitigen Beschläge (63', 64', 65') mit jeweils einem der druckkalottenseitigen Beschläge (60', 61', 62') verbindet.

13. Struktur nach Anspruch 12,
**dadurch gekennzeichnet,**
**dass** die Zugstreben (7', 8', 9') an ihrem einen Ende mit dem haut- und/oder spantseitigen Beschlag (63', 64', 65') und an ihrem anderen Ende mit dem druckkalottenseitigen Beschlag (60', 61', 62') gelenkig, insbesondere mittels einer Auge-Bolzen-Verbindung (54a', 69', 51a', 77'), gekoppelt sind.

14. Struktur nach Anspruch 1 oder Anspruch 12 oder 13,
**dadurch gekennzeichnet,**
**dass** die Zugstreben (7', 8', 9') starr ausgebildet sind.

15. Struktur nach Anspruch 1 oder nach wenigstens einem der Ansprüche 12 bis 14,
**dadurch gekennzeichnet,**
**dass** die Zugstreben (7', 8', 9') in ihrer Länge verstellbar ausgebildet sind.

16. Struktur nach Anspruch 15,
**dadurch gekennzeichnet,**
**dass** die Zugstreben (7', 8', 9') jeweils einen ersten Strebenabschnitt (50') mit einem ersten Gewindeabschnitt (52') und einem zweiten Strebenabschnitt (53') mit einem zweiten Gewindeabschnitt (56') aufweisen, wobei die Länge jeder Zugstrebe (7', 8', 9') mittels Ineinander- oder Auseinanderschrauben der beiden Gewindeabschnitte (52', 56') veränderbar ist.

17. Struktur nach wenigstens einem der Ansprüche 1 bis 16,
**dadurch gekennzeichnet,**
**dass** die Dichtung (32') aus Gummi ausgebildet ist.

18. Struktur nach Anspruch 1 oder 17,
**dadurch gekennzeichnet,**
**dass** die Dichtung (32') als ein umlaufender Gummischlauch ausgebildet ist, welcher eine Hochdruck- und eine Niederdruckseite aufweist, wobei der Gummischlauch hochdruckseitig mit wenigstens einer Öffnung (87') versehen und zwischen dem Spant (23') und/oder dem Hautabschnitt (2') sowie der Druckkalotte (4') angeordnet ist, wobei sich der Gummischlauch auf Grund der Druckdifferenz verstärkt gegen den Spant (23') und/oder gegen den Hautabschnitt (2') sowie gegen die Druckkalotte (4') für einen druckdichteren Abschluss presst.

## Claims

1. Structure (1; 1'), in particular a fuselage structure of an aircraft or spacecraft, having:
a skin portion (2; 2') which has an opening (3; 3');
a pressure cap (4; 4') for pressure-tight closure of the opening (3; 3');
a plurality of tension struts (7, 8, 9; 7', 8', 9') which each connect the pressure cap (4; 4') to the skin portion (2; 2') and receive, as tensile loads, loads acting on the pressure cap (4; 4'); and
a frame (23; 23') which is connected in a pressure-tight manner to the skin portion (2; 2') and to the pressure cap (4; 4');
**characterised by**
an elastic seal (32; 32') which is disposed between the frame (23; 23') and the pressure cap (4; 4') for tolerance compensation between these parts and which connects these parts to each other in a pressure-tight manner.

2. Structure as claimed in claim 1, **characterised in that** the frame (23; 23') has an outer flange (24; 24') which is attached to the skin portion (2; 2').

3. Structure as claimed in claim 1 or 2, **characterised in that** the frame (23; 23') has an inner flange (31; 31') and/or a web (25; 25') to which the seal (32; 32') is attached.

4. Structure as claimed in at least one of the preceding claims, **characterised in that** the skin portion (2; 2') is formed as an annular skin segment, the opening is formed as a cross-sectional opening (3; 3') in the annular skin segment and the frame (23; 23') is formed as an annular frame.

5. Structure as claimed in at least one of claims 1 to 4, **characterised in that** at least one support element (36) is provided which supports the frame (23) on the skin portion (2).

6. Structure as claimed in at least one of the preceding claims, **characterised in that** the tension struts (7, 8, 9) connect the pressure cap (4) directly to the skin portion (2).

7. Structure as claimed in claim 6, **characterised in that** the tension struts (7, 8, 9) each have a skin-side portion (16) which extends between the frame (23) and the skin portion (2) and is attached to the skin portion (2) or to the skin portion (2) and the frame (23).

8. Structure as claimed in claim 7, **characterised in that** the tension struts (7, 8, 9) each have a portion (21) which is bent with respect to the skin-side portion (16) and which extends towards the pressure cap (4).

9. Structure as claimed in claim 8, **characterised in that** the tension struts (7, 8, 9) each have a pressure cap-side portion (14) which adjoins the bent portion (21) and which is attached on the low pressure side to the pressure cap (4).

10. Structure as claimed in claim 9, **characterised in that** the tension struts (7, 8, 9) are each essentially spoon-shaped, wherein the widening portion of the spoon shape forms the pressure cap-side portion (14) of each tension strut (7, 8, 9).

11. Structure as claimed in at least one of claims 8 to 10, **characterised in that** the outer flange (24) of the frame (23) is formed with a radius (26) against which the tension strut (7, 8, 9) lies in the transition region (27) between the skin-side portion and bent portion (16, 21).

12. Structure as claimed in at least one of claims 1 to 4, **characterised in that** a plurality of fittings (63', 64', 65') are attached to each of the skin portion (2') and/or the frame (23') and to the pressure cap (4'), wherein in each case a tension strut (7', 8', 9') connects one of the skin-side and/or frame-side fittings (63', 64', 65') to one of the pressure cap-side fittings (60', 61', 62') respectively.

13. Structure as claimed in claim 12, **characterised in that** the tension struts (7', 8', 9') at one of their ends are coupled to the skin-side and/or frame-side fitting (63', 64', 65') and at their other end to the pressure cap-side fitting (60', 61', 62') in an articulated manner, in particular by means of an eyelet-bolt connection (54a', 69', 51a', 77').

14. Structure as claimed in claim 1 or claim 12 or 13, **characterised in that** the tension struts (7', 8', 9') are formed in a rigid manner.

15. Structure as claimed in claim 1 or as claimed in at least one of claims 12 to 14, **characterised in that** the tension struts (7', 8', 9') are formed so as to be adjustable in length.

16. Structure as claimed in claim 15, **characterised in that** the tension struts (7', 8', 9') each have a first strut portion (50') with a first threaded portion (52') and a second strut portion (53') with a second threaded portion (56'), wherein the length of each tension strut (7', 8', 9') can be changed by screwing the two threaded portions (52', 56') into or out of each other.

17. Structure as claimed in at least one of claims 1 to 16, **characterised in that** the seal (32') is formed from rubber.

18. Structure as claimed in claim 1 or 17, **characterised in that** the seal (32') is formed as a peripheral rubber tube which has a high pressure and a low pressure side, wherein the rubber tube is provided on the high pressure side with at least one opening (87') and is disposed between the frame (23') and/or the skin portion (2') and the pressure cap (4'), wherein, owing to the pressure difference, the rubber tube presses more strongly against the frame (23') and/or against the skin portion (2') and against the pressure cap (4') to produce a more pressure-tight closure.

## Revendications

1. Structure (1 ; 1'), en particulier structure de fuselage d'un aéronef ou véhicule spatial, comprenant :
une section de peau (2 ; 2'), qui présente une ouverture (3 ; 3') ;
une calotte de pression (4 ; 4') pour une fermeture étanche de l'ouverture (3 ; 3') ;
plusieurs tirants (7, 8, 9 ; 7', 8', 9'), qui relient à chaque fois la calotte de pression (4 ; 4') à la section de peau (2 ; 2') et reçoivent les charges agissant sur la calotte de pression (4 ; 4') en tant que charges de traction ; et
un couple (23 ; 23'), qui relié de façon étanche à la section de peau (2 ; 2') et à la calotte de pression (4 ; 4')
**caractérisée par**
un joint élastique (32 ; 32'), qui est disposé entre le couple (23 ; 23') et la calotte de pression (4 ; 4') pour assurer une compensation de tolérances entre ceux-ci et qui relie ceux-ci l'un à l'autre de façon étanche.

2. Structure selon la revendication 1, **caractérisée en ce que** le couple (23 ; 23') présente une ceinture extérieure (24 ; 24') qui est fixée à la section de peau (2 ; 2').

3. Structure selon la revendication 1 ou 2, **caractérisée en ce que** le couple (23 ; 23') présente une ceinture intérieure (31 ; 31') et/ou une nervure (25 ; 25') à laquelle est fixée le joint (32 ; 32').

4. Structure selon au moins une des revendications précédentes, **caractérisée en ce que** la section de peau (2 ; 2') est conçue comme un segment de peau annulaire, l'ouverture comme une ouverture de section transversale (3 ; 3') du segment de peau annulaire et le couple (23 ; 23') comme un couple courant.

5. Structure selon au moins une des revendications 1 à 4, **caractérisée en ce qu'**au moins un élément d'appui (36), qui appuie le couple (23) contre la section de peau (2), est prévu.

6. Structure selon au moins une des revendications précédentes, **caractérisée en ce que** les tirants (7, 8, 9) relient directement la calotte de pression (4) à la section de peau (2).

7. Structure selon la revendication 6, **caractérisée en ce que** les tirants (7, 8, 9) présentent chacun une section côté peau (16), qui s'étend entre le couple (23) et la section de peau (2) et est fixée à la section de peau (2) ou à la section de peau (2) et au couple (23).

8. Structure selon la revendication 7, **caractérisée en ce que** les tirants (7, 8, 9) présentent chacun une section (21) coudée par rapport à la section côté peau (16) et qui s'étend vers la calotte de pression (4).

9. Structure selon la revendication 8, **caractérisée en ce que** les tirants (7, 8, 9) présentent chacun une section côté calotte de pression (14) faisant suite à la section coudée (21) et qui est fixée à la calotte de pression (4) côté basse pression.

10. Structure selon la revendication 9, **caractérisée en ce que** les tirants (7, 8, 9) présentent chacun sensiblement une forme de cuillère, la partie de la forme de la cuillère s'élargissant représentant la section côté calotte de pression (14) de chaque tirant (7, 8, 9).

11. Structure selon au moins une des revendications 8 à 10, **caractérisée en ce que** la ceinture extérieure (24) du couple (23) est formée avec un rayon (26) contre lequel repose le tirant (7, 8, 9) dans la zone de transition (27) entre la section côté peau et la section coudée (16, 21).

12. Structure selon au moins une des revendications 1 à 4, **caractérisée en ce que** plusieurs ferrures (63', 64', 65') sont à chaque fois disposées sur la section de peau (2') et/ou le couple (23') ainsi que sur la calotte de pression (4'), un tirant (7', 8', 9') reliant une des ferrures côté peau et/ou côté couple (63', 64', 65') à une des ferrures côté calotte de pression (60', 61', 62').

13. Structure selon la revendication 12, **caractérisée en ce que** les tirants (7', 8', 9') sont accouplés de façon articulée, en particulier au moyen d'un assemblage à oeil et axe (54a', 69', 51a', 77'), à la ferrure côté peau et/ou côté couple (63', 64',65') à leur première extrémité et à la ferrure côté calotte de pression (60', 61', 62') à leur autre extrémité.

14. Structure selon la revendication 1 ou la revendication 12 ou 13, **caractérisée en ce que** les tirants (7', 8', 9') sont conçus de façon rigide.

15. Structure selon la revendication 1 ou selon au moins une des revendications 12 à 14, **caractérisée en ce que** les tirants (7', 8', 9') sont conçus de façon à pouvoir être réglés en longueur.

16. Structure selon la revendication 15, **caractérisée en ce que** les tirants (7', 8', 9') présentent chacun une première section de tirant (50') dotée d'une première section filetée (52') et une seconde section de tirant (53') dotée d'une seconde section filetée (56'), la longueur de chaque tirant (7', 8', 9') pouvant être modifiée en vissant ou en dévissant les deux sections filetées (52', 56').

17. Structure selon au moins une des revendications 1 à 16, **caractérisée en ce que** le joint (32') est réalisé en caoutchouc.

18. Structure selon la revendication 1 ou 17, **caractérisée en ce que** le joint (32') est réalisé sous la forme d'un tuyau en caoutchouc périphérique, qui présente un côté haute pression et basse pression, le tuyau en caoutchouc présentant au moins une ouverture (87') côté haute pression et étant disposé entre le couple (23') et/ou la section de peau (2') et la calotte de pression (4'), le tuyau en caoutchouc étant, en raison de la différence de pression, pressé de façon renforcée contre le couple (23') et/ou contre la section de peau (2') ainsi que contre la calotte de pression (4') pour assurer une fermeture plus étanche.
